# EUROPEAN PATENT APPLICATION

(11) **EP 1 584 877 A1**
(43) Date of publication of application: **12.10.2005**
(21) Application number: 04394054.3
(22) Date of filing: 25.08.2004
(51) Int. Cl.: F25D 21/04

(54) **Foldable freezer compartment mat**

(30) Priority: 07.04.2004 US 819528
(71) Applicant: Cartier, John L., Bradford, MA 01835 (US)
(72) Inventor: Cartier, John L., Bradford, MA 01835 (US)
(74) Representative: Casey, Lindsay Joseph

(57) **Abstract**

Foldable mats (2) non-adhering to ice are presented including multiple cores (8) of relatively uniform thickness that remain flexible at temperatures below the temperature at which ice forms, and a flexible, water-proof cover (10) surrounding the cores in distinct, foldable sections (4).

## Description

The present invention relates generally to the prevention of ice formation on surfaces, and more particularly to a reusable, folding mat for use, for example, with non-self-defrosting freezers.

The accumulation of ice on a surface of a non-self-defrosting freezer can reduce the storage capacity of the freezer and can be an annoyance in terms of foul odours and the effort required to defrost the freezer. The accumulation of ice on other surfaces such as, for example, outdoor stairs can present a safety hazard of slippery footing. Thus, a need exists to reduce or eliminate the accumulation of ice on such surfaces.

A variety of step pads and mats have been developed for use in outdoor settings. While these devices are generally suitable for their particular purpose, as they are described they are not suitable for additional use in a freezer compartment.

U.S. Patent No. 4,000,947 to Naka, et al. is directed to a flexible non-skid strip comprised of a main body extending along the length of the strip and adapted to be secured to the tread portion of a stair. U.S. Patent No. 5,357,724 to Munekatsu Sonoda is directed to a stair tread in which synthetic rubber is used to encase metal side core portions arranged at the side edges of a substantially horizontal core section at a downward right-angle thereto. U.S. Patent No. 5,898,814 to Yamamoto, et al., is directed to a stair covering including an adjustable thickness anti-skid member and illumination of the stairs. U.S. Pat. No. 6,088,976 to Gillis Roy is directed to a removable, non-skid pad that covers a portion of a step of an exterior staircase so as to allow people to use it more safely. Any snow or ice accumulations are dislodged by removal of the pad from the step and skating it.

According to an aspect of the present invention, there is provided a mat as specified in claim 1. The invention is also directed to a method by which the described apparatus operates and including method steps for carrying out every function of the apparatus.

### Summary Of The Invention

The objects set forth above as well as further and other objects and advantages of the present invention are achieved by the embodiments of a mat that includes at least one inner, insulating core composed of a material that is flexible at cold temperatures and a sufficient thickness to allow compression, and an outer cover that is both slip resistant and water proof. The outer cover of the present invention does not allow ice to adhere to it, and any ice that forms upon it is easily removed. Such a mat provides a simple and convenient way to prevent ice accumulation on surfaces of freezers, and to reduce the hazard of ice accumulation on exterior stairs.

In one aspect, the present invention provides a foldable mat including at least two cores of relatively uniform thickness that remain flexible at temperatures below the temperature at which water freezes (0° Celsius at sea level), and a flexible, water-proof cover including at least two mat sections. Each of the mat sections includes at least one flexible core about which has been formed an air-tight seal, and each of the mat sections is foldable onto another of the mat sections. Forming the mat in rectangular sections facilitates such folding, but such geometry is not required. The flexible core may be secured to the cover within the air-tight volumes by an adhesive.

In a preferred embodiment, the flexible cores are each composed of foam material that occupies most of the inner volume of the corresponding mat section. Variations on this design, however, are possible. For example, any material that remains flexible at low temperatures may be employed, such as certain gases (e.g., air) or fluids. The materials employed in the mat that have the potential of contacting food should be generally recognised as safe for such contact.

When the mat is used in a freezer, no ice will form on the surface to which the mat is secured or upon which the mat rests. Any ice formed on the outer cover of the mat is breakable and easily removable by deforming the flexible mat. When the mat is secured to an exterior step, for example, ice accumulated on the mat will, by virtue of the body weight of a person stepping on the mat, compress the flexible core and deform the mat such that the ice will break. Flexing the mat after ice has accumulated upon it will break the ice, and the broken ice may then be easily swept or pushed off the mat. The ice may be simply removed by pushing it from the mat with the person's foot, or brushing it from the mat, as the cover has non-adhering characteristics. The outer cover preferably has slip-resistant features or characteristics, as well as properties that allow it to be easily cleaned.

The outer surface of the cover may be textured to prevent slippage. The mat preferably includes attachment means (described below) to secure the mat to the desired surface (e.g., a freezer floor or an outdoor step). The mat sections and cores are dimensioned to provide maximum coverage of the desired surface, with the cover including seals at appropriate positions so as to envelope the cores and provide flexible folds by which adjacent mat sections may be folded upon one another. The mat may have sealed border providing some adaptability to the surface dimensions of the surface upon which the mat is to be deployed. In certain embodiments, each section of the mat may include more than one flexible core, and in yet other embodiments each section of the mat may be oriented with respect to other mat sections so as to enable adjacent, non-planar surfaces of for example, a freezer, to be covered.

The invention will be understood in greater detail from the following description of preferred embodiments thereof given by way of example only and with reference to the accompanying drawings in which:
**Figure 1** is an illustration of a top-view of an ice-eliminating mat in accordance with the present invention;
**Figure 2** is an illustration of a cross-sectional front view of an ice-eliminating mat in accordance with the present invention;
**Figure 3** is an illustration of the mat wherein adjacent sections are being folded upon one another;
**Figure 4** is an illustration of a folding mat in an external staircase application; and
**Figure 5** is an illustration of an alternative embodiment of an ice-eliminating mat in accordance with the present invention.

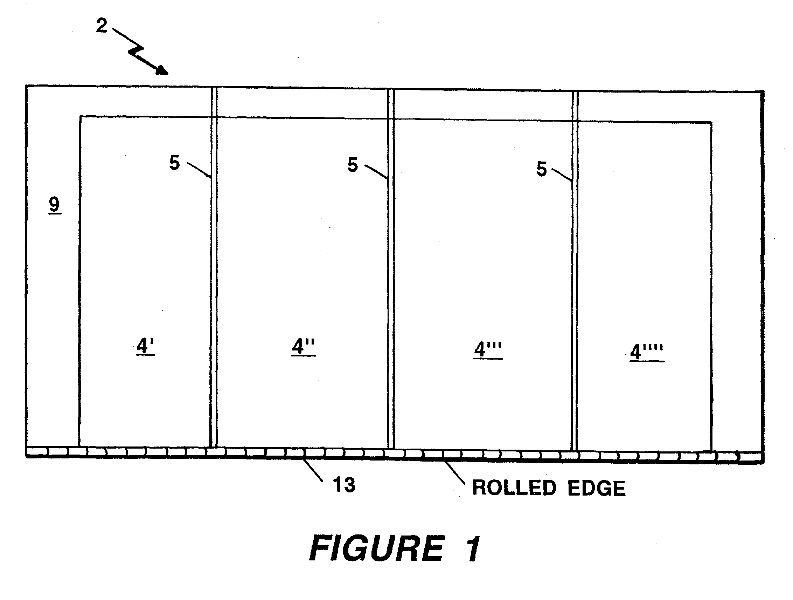

Referring now to the drawings and in particular to **Figure 1**, there is shown a top view of a foldable ice-eliminating mat **2.** The mat **2** comprises an integral, single-piece apparatus having at least two (preferably rectangular) adjacent mat sections **4.** Between each of the adjacent sections is a thin sealed edge **5** of sufficient width (i.e., spacing between mat sections) and flexibility to allow each adjacent section to fold over on top of its neighboring section. An optional rolled front-edge **13** makes the mat easier to grip during deployment and retrieval from the surface to which the mat **4** is applied.

**Figure 1** also illustrates a preferred option of having a relatively flat, sealed border **9** extending along three sides of the perimeter of the mat **2.** This allows some flexibility in positioning the mat on the desired surface, allowing a portion of the border to fold up on a vertical surface, and providing a region for securing the mat to the desired surface. In outdoor applications, for example, the mat may be secured with fasteners (*e.g.*, staples, tacks, nails, etc.) that pierce the border **9** region and extend into the desired step or landing. The foldability of the mat and its flexible border region allow the mat to be more easily packaged, shipped and stored. A single-fold embodiment (i.e., having two mat sections) that has a length of 36" (914.4mm), for instance, can be reduced to 18" (457.2mm) for shipping and handling by folding the mat at a centrally-disposed seal/fold extending along the width of the mat. The freezer mat embodiments typically have a blue coloring, but obviously any desirable color may be selected. For outdoor ice-breaking mats, darker colors such as, for example, black are preferable for their spectral absorption properties that can assist in melting ice.

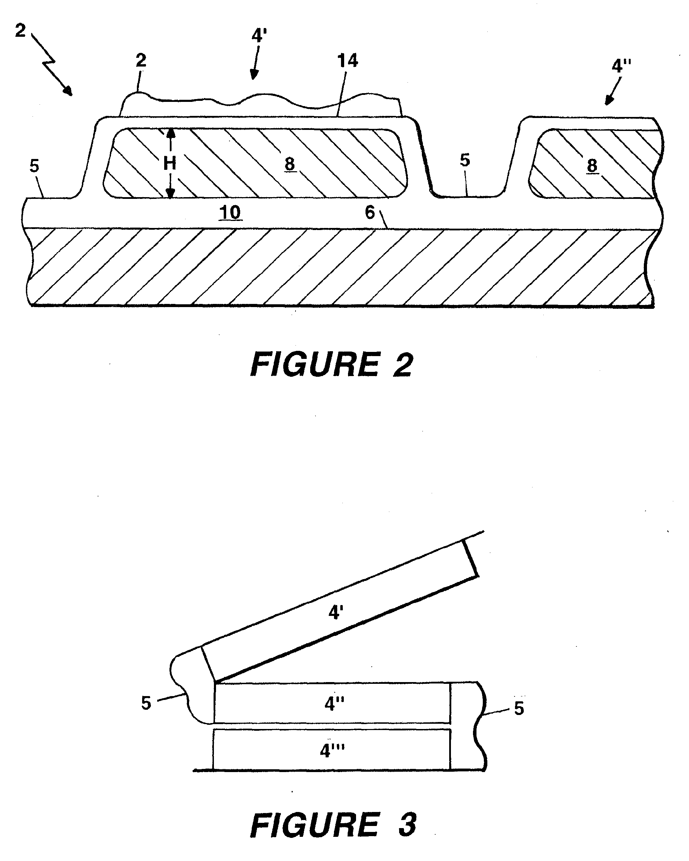

**Figure 2** presents a cross-sectional front view (not drawn to scale) of the mat **2** positioned adjacent a surface **6** upon which it is desired that no ice forms such as, for example, a freezer surface. In each mat section **4** is at least one core 8 having a relatively uniform thickness. Each core **8** is composed of an insulating substance that remains flexible at temperatures below ice-formation temperatures (0° C at sea level, but varies with elevation.) One such material is STYROFOAM™, but equivalents thereof and/or other substances such as low-freezing point gases and fluids may also be employed. An air-tight, water-proof seal is formed around each core **8** by cover **10.** In a freezer compartment, ice is prevented from forming on the mat. In an external staircase application, ice **12** may form on an outer surface **14** of the mat **2** (rather than the surface **6),** but because the cover **10** is composed of a flexible material to which the ice cannot adhere, the ice **12** can be easily broken by applying a compressive force to the section **4** having the flexible core contained therein, and then the broken ice can be swept or pushed off the surface **14** of the mat **2.**

The cover preferably has few or no holes that might allow water to become positioned between the mat and the protected surface and turn to ice. The cover material is preferably comprised of an imitation leather such as knit cloth that is coated with polyvinyl chloride (PVC) after pressing and forming. Such a cover resists low temperatures and premature aging, and is quite durable. PVC imitation leather has been standardized in national standard GB/T8948-94 (Great Britain), due to its exemplary waterproofing properties and its ability to allow optional texturing to create non-slip surfaces. Other flexible materials, such as pure PVC, polyvinyl resins, or polyurethane or synthetic elastomers and their equivalents may alternatively be employed.

**Figure 3** illustrates how adjacent mat sections **4'-4'''** are foldable upon one another due to sufficient spacing between the core-containing mat sections **4,** as determined by the width of the sealed edges **5.** For a mat **2** that uses cores **8** having thicknesses of approximately 1/4'' (6.35mm), a sealed edge **5** having a width of several cm or more is adequate to allow folding.

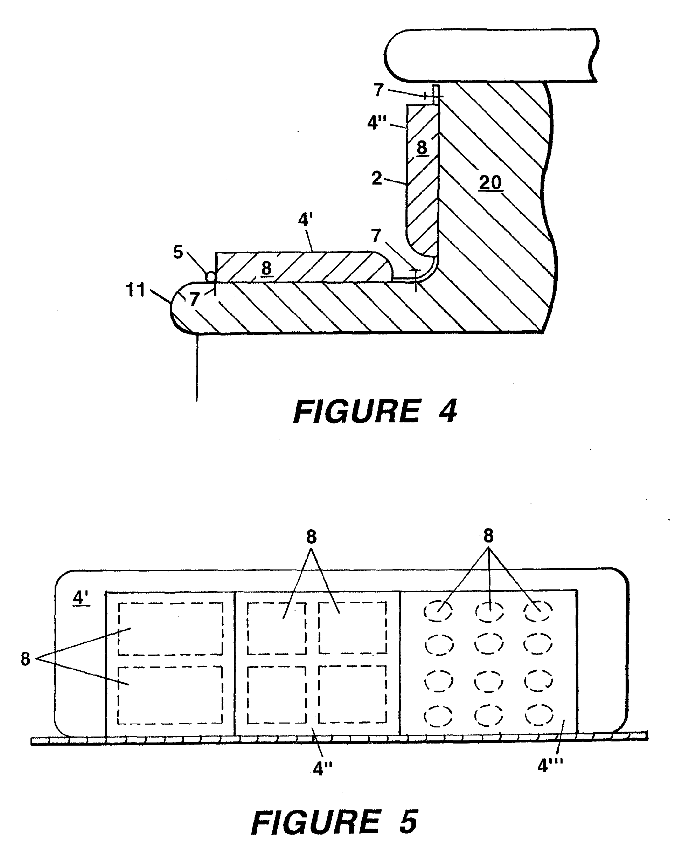

**Figure 4** illustrates another embodiment of the ice-eliminating mat **2** for use with an external step **20** that enables coverage of multiple non-planar surfaces. The mat **2** is placed on an outdoor step in late Autumn before ice and snow become a threat to safety. The mat may be secured by means such as fasteners (staples, nails, screws), two sided tape, velcro, or any other conventional mounting technique. If the application is on brick or concrete stairs, a silicone sealer or a like material can be used to secure the mat for the duration of the winter. The mat is positioned approximately 1/2" (12.7mm) from the front edge **11** of the step **20** with the rounded edge **5** to the front, then placing staples **7** as needed through sealed regions of the mat **2,** taking precaution not to pierce the cores **8.** Note that in the two-fold embodiment depicted, the two adjacent mat sections **4', 4"** enable coverage of more than a single, planar surface. This same concept can be extended to the non-defrosting freezer use, wherein more than one surface of the freezer can be protected from ice formation by the mat **2.** Of course, the ice-eliminating mat may be used to cover one surface, with or without securing means, of a freezer if that is desired. For example, a single section **4',** or multiple sections in combination, may provide sufficient surface area to cover the bottom rack of a freezer.

**Figure 5** illustrates yet another alternative embodiment of the mat **2,** wherein more than one core **8** is enveloped within each mat section **4.** Varying numbers of cores are depicted in the illustration merely for the purpose of demonstrating alternatives and the number of cores in each mat section is not necessarily different. Such embodiments may be useful in creating a contour or texture to the outer surface of the mat, enhancing the mat's anti-slippage characteristics. The ice-eliminating mat **2** is formed using conventional sealing and molding techniques, including by controlled application of heat and/or ultrasound energy to the regions of the cover **10** where sealing is required, such as along the edges **5,** border **9,** and rolled front edge **13.** In a realized non-limiting embodiment, an 18"x36" (457.2mm x 914.4mm) piece of PVC was used to form a cover **10** having an approximate 1" border **9** around three sides of the mat **2.** A piece of 1/4" (6.35mm) thick foam having approximate length and width dimensions of 8"x34" (203.2mm x 863.6mm) was cut into four rectangular cores and positioned spaced-apart on the PVC cover **10.** A pressure-sensitive adhesive (optional) was applied to affix the cores **8** to the PVC cover at desired locations, and then the cover was folded over the tops of the cores and sealed around the perimeters of the cores and along the border of the mat. Provided the seals are not broken or the cores compromised, the foldable, ice-eliminating mat will retain it's flexibility and perform as intended. In alternative embodiments employing low-freezing-point gases and fluids as the core materials, the mat may be formed with hollow cores via conventional injection and/or blow molding, followed by material injection into the cores and re-sealing.

Although the invention has been described with respect to various embodiments, it should be realized this invention is also capable of a wide variety of further and other embodiments within the spirit of the invention.

## Claims

1. A foldable mat, comprising:
at least two cores of relatively uniform thickness that remain flexible at temperatures below the temperature at which ice forms; and
a flexible, water-proof cover including at least two mat sections, each section including at least one air-tight seal around a corresponding one of the at least two cores, and each section being foldable on top of another of the mat sections.

2. A mat as claimed in claim 1, wherein the core is composed
(a) of a foam material; or
(b) of an insulating substance selected from the group consisting of low-freezing-point fluids and gases.

3. A mat as claimed in claim 1 or claim 2, wherein each of the cores in adjacent mat sections are separated by relatively thin, flexible seal(s).

4. A mat as claimed in any of claims 1-3, wherein the outer surface of the cover is textured to provide a non-slip surface.

5. A mat as claimed in any of claims 1-4, wherein the cover
(a) has a substantially rectangular surface area bordered on three sides by a relatively wide sealed edge; or
(b) forms a continuous surface.

6. A foldable freezer mat as claimed in any of claims 1-5, wherein the thickness of each core is approximately 1/4" (6.35mm).

7. A mat as claimed in any of claims 1-6, wherein the cover is composed of a material selected from the group consisting of PVC-coated fabrics, PVC, polyvinyl resins, or polyurethane, synthetic elastomers, and their equivalents and, preferably, wherein the imitation leather includes a knit cloth and there is an adhesive-bonded and chemical fabric forming material which is coated with PVC after it is pressed and formed.

8. A mat as claimed in any of claims 1-7, wherein each core occupies a significant portion of the inner volume of the corresponding mat section.

9. A mat as claimed in any of claims 1-8, wherein each section includes a plurality of air-tight seals around corresponding cores.

10. A mat as claimed in any of claims 1-8, wherein adjacent mat sections can be secured to adjacent non-planar surfaces so as to allow the mat to simultaneously cover multiple surfaces.

11. A mat as claimed in any of claims 1-10 wherein the mat is a foldable freezer mat.

12. A mat as claimed in claim 11, wherein the outer surface of the cover is composed of a material that is food-safe and non-adhering to ice.

13. A mat as claimed in claim 11 or claim 12, further comprising means for attaching the cover to a surface of a freezer compartment.

14. A mat as claimed in any of claims 11-13, wherein the cover has a substantially rectangular surface area bordered on one side by a curved edge.

15. A mat as claimed in any of claims 11-14, wherein the surface area of one of the sections substantially approximates the surface area of a rack of a freezer.

16. A mat as claimed in any of claims 11-15, wherein the combined surface area of two or more of the at least two sections substantially approximates the surface area of a rack of a freezer.

17. A mat as claimed in any of claims 1-10 wherein the mat is a foldable ice-breaking mat for use on an outdoor step or landing.

18. A mat as claimed in claim 17, wherein the outer surface of the cover is composed of a material that is non-adhering to ice after the ice is broken.

19. A mat as claimed in claim 17 or claim 18, further comprising means for attaching the cover to a surface of the step or landing.

20. A mat as claimed in any of claims 17-19, wherein the cover has a substantially rectangular surface area bordered on one side by a rolled edge.

21. A mat as claimed in any of claims 17-20, wherein the surface area of one of the sections substantially approximates the surface area of a surface.

22. A mat as claimed in any of claims 17-21, wherein adjacent mat sections can be secured to adjacent non-planar surfaces so as to allow the mat to simultaneously cover multiple surfaces.
